# EUROPEAN PATENT APPLICATION

(11) **EP 4 835 842 A2**
(43) Date of publication of application: **04.11.2026**
(21) Application number: 26206890.1
(22) Date of filing: 23.09.2026
(51) Int. Cl.: G06V 20/52, G06V 20/40, G06V 40/20

(54) **RISK DETERMINATION METHOD, APPARATUS, STORAGE MEDIUM, AND ELECTRONIC DEVICE**

(30) Priority: 04.08.2026 SG 10202602712
(71) Applicant: XG TECH PTE. LTD., Singapore 179098 (SG)
(72) Inventor: LIN, Wei, 179098 Singapore (SG); HUANG, Jingchang, 179098 Singapore (SG)
(74) Representative: Dehns Germany Partnerschaft mbB

(57) **Abstract**

Disclosed are a risk determination method, an apparatus, a storage medium, and an electronic device. The method includes: determining (S100) first risk information based on a first image from a first viewing angle, the first risk information indicating at least one of a behavioral risk, a risk confidence, and a risk evolution trend associated with a target object of the first image and a risk area in the first image; upon determining the existence of a risk based on the first risk information, obtaining (S200) a second image from a second viewing angle based on the near-field device, wherein the first viewing angle is different from the second viewing angle; determining (S300) second risk information based on the second image from the second viewing angle; and determining (S400) a target risk based on the first risk information and the second risk information.

## Description

### TECHNICAL FIELD

The present disclosure relates to the field of terminal technologies, and in particular, to a risk determination method, an apparatus, a storage medium, and an electronic device.

### BACKGROUND

With the development of the field of artificial intelligence, in a near-field environment, multiple near-field devices (for example, including a robot vacuum cleaner, a smart camera, a smart speaker, etc.) are typically configured.

Currently, near-field devices typically issue risk alert information only after a risk event has been detected (for example, a user fall, a refrigerator door left open, etc.), which makes it impossible to avoid the risk.

### SUMMARY

To solve the above technical problem, the present disclosure provides a risk determination method, an apparatus, a storage medium, and an electronic device, which can achieve risk prediction and enhance user safety.

In a first aspect, the present disclosure provides a risk determination method. The method is applicable to a near-field device system. The near-field device system includes at least one near-field device. The method includes:
determining first risk information based on a first image from a first viewing angle, the first risk information indicating at least one of a behavioral risk, a risk confidence, and a risk evolution trend associated with a target object of the first image and a risk area in the first image;
upon determining the existence of a risk based on the first risk information, obtaining a second image from a second viewing angle based on the near-field device, wherein the first viewing angle is different from the second viewing angle;
determining second risk information based on the second image from the second viewing angle; and
determining a target risk based on the first risk information and the second risk information.

In a second aspect, the present disclosure provides a risk determination apparatus. The apparatus is applicable to a near-field device system. The near-field device system includes at least one near-field device. The apparatus includes:
a first determination module, configured to determine first risk information based on a first image from a first viewing angle, the first risk information indicating at least one of a behavioral risk, a risk confidence, and a risk evolution trend associated with a target object of the first image and a risk area in the first image;
a second determination module, configured to, upon determining the existence of a risk based on the first risk information, obtain a second image from a second viewing angle based on the near-field device, wherein the first viewing angle is different from the second viewing angle;
a third determination module, configured to determine second risk information based on the second image from the second viewing angle; and
a fourth determination module, configured to determine a target risk based on the first risk information and the second risk information.

In a third aspect, the present disclosure provides a computer-readable storage medium storing a computer program, the computer program being configured to execute the risk determination method proposed in the embodiments of the first aspect.

In a fourth aspect, the present disclosure provides an electronic device, including: a processor; a memory for storing processor-executable instructions; the processor being configured to read executable instructions from the memory and execute the instructions to implement the risk determination method proposed in the embodiments of the first aspect.

The risk determination method, apparatus, storage medium, and electronic device provided by the embodiments of the present disclosure determine, within a near-field device system, first risk information through a first image from a first viewing angle. In this way, through at least one of the behavioral risk, the risk confidence, and the risk evolution trend associated with the target object of the first image and the risk area in the first image as indicated by the first risk information, it can be determined that a risk exists in the risk space to be detected from the first viewing angle. Therefore, the near-field device proactively perceives the risk. Furthermore, upon determining the existence of a risk based on the first risk information, a second image from a second viewing angle different from the first viewing angle is obtained based on the near-field device. Second risk information is determined based on the second image from the second viewing angle. A target risk is determined based on the first risk information and the second risk information. In this way, the acquisition of an image from the second viewing angle is proactively triggered, further confirmation of the risk is achieved, risk prediction is completed, and user safety is enhanced.

### BRIEF DESCRIPTION OF THE DRAWINGS

FIG. 1 is a schematic diagram of a near-field device system provided by an exemplary embodiment of the present disclosure;
FIG. 2 is a software architecture diagram of a near-field device system provided by an exemplary embodiment of the present disclosure;
FIG. 3 is a schematic flowchart of a risk determination method provided by an exemplary embodiment of the present disclosure;
FIG. 4 is another schematic flowchart of a risk determination method provided by an exemplary embodiment of the present disclosure;
FIG. 5 is yet another schematic flowchart of a risk determination method provided by an exemplary embodiment of the present disclosure;
FIG. 6 is yet another schematic flowchart of a risk determination method provided by an exemplary embodiment of the present disclosure;
FIG. 7 is a schematic flowchart of step S100 provided by an exemplary embodiment of the present disclosure;
FIG. 8 is a schematic flowchart of step S120 provided by an exemplary embodiment of the present disclosure;
FIG. 9 is a schematic flowchart of step S121 provided by an exemplary embodiment of the present disclosure;
FIG. 10 is another schematic flowchart of step S100 provided by an exemplary embodiment of the present disclosure;
FIG. 11 is a schematic flowchart of step S200 provided by an exemplary embodiment of the present disclosure;
FIG. 12 is another schematic flowchart of step S200 provided by an exemplary embodiment of the present disclosure;
FIG. 13 is a schematic structural diagram of a risk determination apparatus provided by an exemplary embodiment of the present disclosure;
FIG. 14 is another schematic structural diagram of a risk determination apparatus provided by an exemplary embodiment of the present disclosure;
FIG. 15 is a structural diagram of an electronic device provided by an embodiment of the present disclosure.

### DETAILED DESCRIPTION OF THE EMBODIMENTS

To explain the present disclosure, exemplary embodiments of the present disclosure will be described in detail below with reference to the accompanying drawings. Obviously, the described embodiments are only a part of the embodiments of the present disclosure, rather than all of the embodiments, and it should be understood that the present disclosure is not limited by the exemplary embodiments.

It should be noted that unless otherwise specifically stated, the relative arrangement of components and steps, numerical expressions, and numerical values set forth in these embodiments do not limit the scope of the present disclosure.

### Application overview

A near-field device refers to a terminal device, deployed in a near-field environment (for example, a home, an office, etc.), that has the ability to perceive, move, or interact. Such devices typically operate within a local area network or an ecosystem and are capable of data exchange and collaborative work.

The following provides an exemplary description using near-field devices in a home scenario. Near-field devices in a home scenario typically include a robot vacuum cleaner, a smart camera, a smart speaker, a smart door lock, a millimeter-wave radar, smart lighting, environmental sensors, a pan-tilt device, a home robot, etc.

In a home scenario, near-field devices (for example, smart cameras) typically issue risk alert information (for example, an alarm) only after a risk event has been detected (for example, a user fall, a refrigerator door left open, smoke appearing in the kitchen, a user remaining stationary for an extended period of time, etc.). In this way, near-field devices cannot proactively perceive risks.

That is to say, in a near-field environment, there exists the problem that near-field devices cannot proactively perceive risks and thereby avoid risks.

To solve the above problem, the present disclosure provides a risk determination method, an apparatus, a storage medium, and an electronic device. The method determines, within a near-field device system, first risk information through a first image from a first viewing angle. Furthermore, through at least one of the behavioral risk, the risk confidence, and the risk evolution trend associated with the target object of the first image and the risk area in the first image as indicated by the first risk information, it can be determined that a risk exists in the risk space to be detected from the first viewing angle. Therefore, the near-field device proactively perceives the risk. Furthermore, upon determining the existence of a risk based on the first risk information, a second image from a second viewing angle different from the first viewing angle is obtained based on the near-field device. Second risk information is determined based on the second image from the second viewing angle. A target risk is determined based on the first risk information and the second risk information. In this way, the acquisition of an image from the second viewing angle is proactively triggered, further confirmation of the risk is achieved, risk prediction is completed, and user safety is enhanced.

### Exemplary system

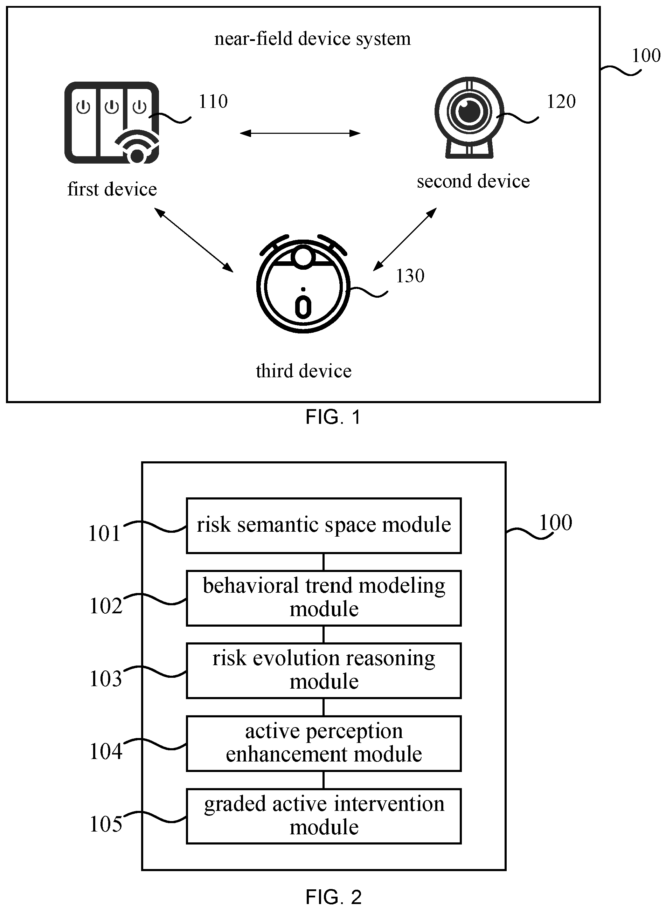

FIG. 1 is a schematic diagram of a near-field device system provided by an exemplary embodiment of the present disclosure.

As shown in FIG. 1, in some embodiments, the risk determination method may be applied to a near-field device system 100. The near-field device system 100 includes at least one near-field device.

For ease of introducing the embodiments of the present disclosure, the following embodiments of the present disclosure provide an exemplary description using the near-field device system 100 including a first device 110, a second device 120, and a third device 130.

The first device 110 may be configured as a master device, and the second device 120 and the third device 130 may be configured as slave devices.

By way of example, when the first device 110 serves as the master device, the first device 110 may be used to schedule the near-field devices in the near-field device system 100. The first device 110 is, for example, a home gateway.

The second device 120 may be a slave device having a fixed position, configured to continuously acquire monitoring data in the near-field environment for use in risk determination. The second device 120 is, for example, a smart camera.

The third device 130 may be a movable slave device, configured to acquire monitoring data of a supplementary viewing angle relative to the second device 120 for use in further risk determination. The third device 130 is, for example, a robot vacuum cleaner.

The first device 110, the second device 120, and the third device 130 may be communicatively connected to achieve collaborative work.

In one implementation, the second device 120 is configured to: acquire a first image from a first viewing angle and send the first image from the first viewing angle to the first device 110.

The first device 110 is configured to: determine first risk information based on the received first image from the first viewing angle, the first risk information indicating at least one of a behavioral risk, a risk confidence, and a risk evolution trend associated with a target object of the first image and a risk area in the first image.

The first device 110 is further configured to: upon determining the existence of a risk based on the first risk information, control the third device 130 to acquire a second image from a second viewing angle, wherein the first viewing angle is different from the second viewing angle.

The third device 130 is configured to: acquire the second image from the second viewing angle and send the second image from the second viewing angle to the first device 110.

The first device 110 is further configured to: determine second risk information based on the received second image from the second viewing angle, and determine a target risk based on the first risk information and the second risk information.

It should be noted herein that the near-field device system 100 includes, but is not limited to, the above-described first device 110, the second device 120, and the third device 130. The near-field device system 100 may include more or fewer near-field devices. For example, the near-field device system 100 may further include a smart speaker, a smart door lock, a millimeter-wave radar, smart lighting, environmental sensors, a pan-tilt device, a home robot, etc. The embodiments of the present disclosure impose no limitation on the number and types of near-field devices, the master-slave relationships among the near-field devices, and the specific configuration manner of the near-field devices in the near-field device system 100.

In the process of implementing the risk determination method based on the near-field device system 100, the embodiments of the present disclosure do not simply add a new detection algorithm in any single near-field device. Instead, multiple near-field devices are unified for collaborative scheduling to form an active perception network, thereby enabling the near-field device system 100 to move beyond risk detection and form a closed-loop solution of risk evolution analysis - active perception enhancement - active patrol.

In the near-field device system 100 of the embodiments of the present disclosure, when the second device 120 acquires the first image from the first viewing angle, the first device 110 analyzes the first image from the first viewing angle to obtain first risk information. In this way, through at least one of the behavioral risk, the risk confidence, and the risk evolution trend associated with the target object of the first image and the risk area in the first image as indicated by the first risk information, it can be determined that a risk exists in the risk space to be detected from the first viewing angle. Therefore, the near-field device proactively perceives the risk. Furthermore, upon determining the existence of a risk based on the first risk information, a second image from a second viewing angle different from the first viewing angle is obtained based on the near-field device. Second risk information is determined based on the second image from the second viewing angle. A target risk is determined based on the first risk information and the second risk information. In this way, the acquisition of an image from the second viewing angle is proactively triggered, further confirmation of the risk is achieved, risk prediction is completed, and user safety is enhanced.

FIG. 2 is a software architecture diagram of a near-field device system provided by an exemplary embodiment of the present disclosure.

As shown in FIG. 2, in some embodiments, the software architecture of the near-field device system 100 may include a risk semantic space module 101, a behavioral trend modeling module 102, a risk evolution reasoning module 103, an active perception enhancement module 104, and a graded active intervention module 105.

The risk semantic space module 101, the behavioral trend modeling module 102, the risk evolution reasoning module 103, the active perception enhancement module 104, and the graded active intervention module 105 may be configured in the same near-field device or in different near-field devices.

The embodiments of the present disclosure provide an exemplary description only with the risk semantic space module 101, the behavioral trend modeling module 102, the risk evolution reasoning module 103, the active perception enhancement module 104, and the graded active intervention module 105 being configured in the same near-field device (for example, the first device 110).

The risk semantic space module 101 may be configured to construct spatial relationships, for example, including risk areas, visible areas, occlusion relationships, dynamic visible domains, and device spatial relationships, etc.

A risk area refers to a specific geographic scope or spatial entity in a near-field environment that is pre-delineated or dynamically identified and has potential safety hazards. A visible area refers to the physical spatial scope that a near-field device can observe without occlusion at a specific moment and a specific position in a near-field environment. An occlusion relationship refers to a line-of-sight blocking state in which, from a specific viewing angle in a near-field environment, foreground objects (such as furniture or walls) block background target objects or specific risk areas. A dynamic visible domain refers to a dynamic spatial set of the visible area of a near-field device having movement capability or pan-tilt adjustment capability that is updated in real time along with changes in time, position, and orientation during motion or posture adjustment. A device spatial relationship refers to the relative position, distance, topological structure, and orientation relationship between the near-field devices within the near-field device system, and between the near-field devices and the near-field environment (for example, walls, furniture, risk areas).

The risk semantic space module 101 may further construct other types of spatial relationships, which are not limited in the embodiments of the present disclosure.

In some possible implementations, the risk semantic space module 101 may generate a risk semantic map based on the constructed spatial relationships.

A risk semantic map is a data structure for representing a mapping relationship between preset risk areas and risk semantic information, which provides basic risk cognition capability for the system by establishing associations between a specific physical area and its potential safety attribute label. By way of example, a preset risk area includes a kitchen knife area, a balcony edge area, and a bathroom area; risk semantic information includes a sharp instrument risk, a fall risk, and a slip risk; and the risk semantic map represents mapping relationships such as kitchen knife area - sharp instrument risk, balcony edge area - fall risk, and bathroom area - slip risk.

In some possible implementations, the risk semantic space module 101 may further generate a spatial risk relationship graph on the basis of the risk semantic map.

A spatial risk relationship graph is a data structure for representing a mapping relationship among a preset risk area, preset behavioral data, and a preset behavioral risk, which may indicate the association among a risk area, a behavior that triggers risks, and a possible resulting risk consequence. By way of example, the preset risk area includes a kitchen knife area and a tabletop water cup area; preset behavioral data includes a child approaching behavior and a pet activity behavior; and the preset behavioral risk includes an injury risk and a spill risk. The spatial risk relationship graph represents mapping relationships such as kitchen knife area - child approaching behavior - injury risk, and tabletop water cup area - pet activity behavior - spill risk.

The embodiments of the present disclosure impose no limitation on the specific type of the mapping relationship between the preset risk area and the risk semantic information in the risk semantic map, and impose no limitation on the specific type of the mapping relationship among the preset risk area, the preset behavioral data, and the preset behavioral risk in the spatial risk relationship graph.

The behavioral trend modeling module 102 may be configured to analyze a user behavioral trend, for example, analyzing a behavioral continuity, a behavioral deviation degree, a behavior chain, an activity trend, a risk precursor, etc., of the user.

In some possible implementations, the behavioral trend modeling module 102 may be configured to generate behavior chain data.

Behavior chain data is a structured data set formed by concatenating, in chronological order, a series of interrelated actions, reactions, positions, and state changes of a target object (such as an elderly person, a child, or a pet) occurring within a specific time window, based on time-sequenced behavioral change data and environmental change data. The behavior chain data reflects the complete trajectory and logical association of the behavioral evolution of the target object. By way of example, behavior chain data includes elderly person fall risk chain data (i.e., a series of data such as the elderly person getting out of bed - unstable gait - walking while holding onto a wall), a child dangerous behavior chain (i.e., a series of data such as a child entering the kitchen - approaching the knife area - a reaching action), and a pet knocking-over risk chain (i.e., a series of data such as a pet approaching the table edge - a water cup being present on the tabletop - the pet jumping).

The risk evolution reasoning module 103 may be configured to generate risk evolution process information, including such as risk trend information, risk level information, risk uncertainty information, etc.

In some possible implementations, the risk evolution reasoning module 103 may further generate a risk diffusion path. A risk diffusion path refers to the trajectory along which a risk propagates from an initial area outward following the activity of a target object (such as a pet). By way of example, when the near-field device system detects contamination in a cat litter area and the pet is currently moving, the system can superimpose a contamination source marker with the pet's movement trajectory, predict that the contamination will spread outward along the pet's activity path, and generate a risk diffusion path.

The active perception enhancement module 104 may be configured to proactively perceive a risk, for example, proactively identifying a perception blind zone, generating an observation demand, scheduling a mobile device, acquiring a supplementary viewing angle, etc.

The graded active intervention module 105 may be configured to control a near-field device to dynamically perform a risk intervention action, for example, performing a voice reminder action, a video confirmation action, a robot approach action, a contact notification action, and an emergency call action, etc.

The risk semantic space module 101, the behavioral trend modeling module 102, the risk evolution reasoning module 103, the active perception enhancement module 104, and the graded active intervention module 105 work collaboratively to implement the risk determination method.

The steps of the risk determination method involved in subsequent embodiments of the present disclosure correspond to the functions of the above modules. The specific implementation of the above modules may be derived adaptively based on the subsequent embodiments, and the embodiments of the present disclosure will not elaborate on this herein.

The near-field device system 100 in the embodiments of the present disclosure, through the collaborative work among the risk semantic space module 101, the behavioral trend modeling module 102, the risk evolution reasoning module 103, the active perception enhancement module 104, and the graded active intervention module 105, can determine first risk information based on a first image from a first viewing angle. Furthermore, through at least one of the behavioral risk, the risk confidence, and the risk evolution trend associated with the target object of the first image and the risk area in the first image as indicated by the first risk information, it can be determined that a risk exists in the risk space to be detected from the first viewing angle. Therefore, the near-field device proactively perceives the risk. Furthermore, upon determining the existence of a risk based on the first risk information, a second image from a second viewing angle different from the first viewing angle is obtained based on the near-field device. Second risk information is determined based on the second image from the second viewing angle. A target risk is determined based on the first risk information and the second risk information. In this way, the acquisition of an image from the second viewing angle is proactively triggered, further confirmation of the risk is achieved, risk prediction is completed, and user safety is enhanced.

### Exemplary method

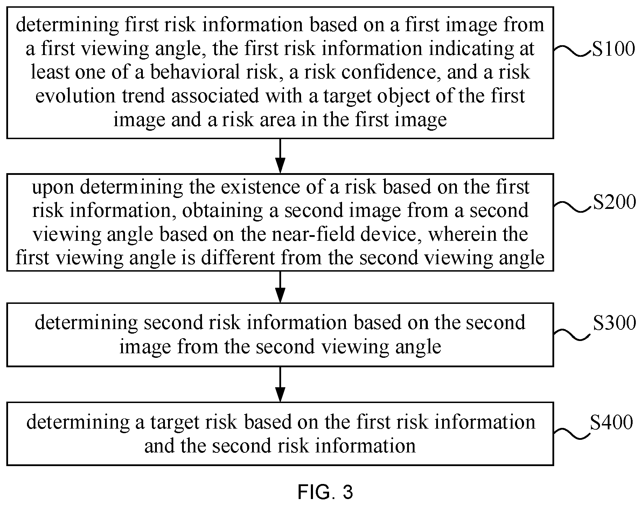

FIG. 3 is a schematic flowchart of a risk determination method provided by an exemplary embodiment of the present disclosure. This embodiment may be applied to a near-field device system. The near-field device system may include at least one near-field device. The execution entity of the risk determination method provided by the embodiments of the present disclosure may be a master device in the near-field device system (for example, a home gateway, a control device of a home smart system), or may be any near-field device having computing capability in the near-field device system, or a cloud server communicatively connected to the near-field device system, which is not limited in the embodiments of the present disclosure. As shown in FIG. 3, in some embodiments, the method includes steps S100 to S400.

Step S100: determining first risk information based on a first image from a first viewing angle, the first risk information indicating at least one of a behavioral risk, a risk confidence, and a risk evolution trend associated with a target object of the first image and a risk area in the first image.

In one implementation, the near-field device system may determine the first risk information based on at least one first image from a first viewing angle.

The first risk information is a risk data set preliminarily determined by the near-field device system based on the first image from the first viewing angle. The first risk information indicates a plurality of risk data of different dimensions, including, for example, a behavioral risk, a risk confidence, and a risk evolution trend.

A behavioral risk refers to a risk (for example, a fall risk) contained in an activity (for example, unstable gait of an elderly person) performed by a target object (for example, an elderly person, a child, or a pet).

A risk confidence is used to measure the degree of certainty of the risk obtained by making a determination on the first image.

A risk evolution trend is used to predict the probability change of a risk occurring within a future period of time by analyzing the behavior chain of the target object.

It should be noted herein that in the embodiments of the present disclosure, the first risk information may indicate risk data of more or fewer dimensions, which is not limited in the embodiments of the present disclosure.

By adopting the implementation of this step, the near-field device system determines first risk information through the first image from the first viewing angle, so as to preliminarily assess the risk in the near-field environment, thereby enabling risk prediction.

Step S200: upon determining the existence of a risk based on the first risk information, obtaining a second image from a second viewing angle based on the near-field device, wherein the first viewing angle is different from the second viewing angle.

In one implementation, the near-field device system may determine the existence of a risk upon determining that the first risk information satisfies a preset condition.

The preset condition is, for example, used to determine that the risk evolution trend is on an upward trend, or the risk confidence is less than a confidence threshold. The embodiments of the present disclosure impose no limitation on the manner of setting the preset condition.

By way of example, the risks determined by the near-field device system based on the first risk information may include: an elderly person staying in the restroom for an extended period of time, a child entering a camera blind zone, a pet making abnormal sounds with an unidentified source, nighttime bedroom area images being invisible, etc.

In this way, when the near-field device system determines the existence of a risk based on the preset condition, the near-field device system can proactively perceive the risk, that is, proactively acquire the second image from the second viewing angle.

By adopting the implementation of this step, the near-field device system can acquire an image from a supplementary viewing angle of an occluded area based on switching of viewing angles, for subsequent further risk determination.

Step S300: determining second risk information based on the second image from the second viewing angle.

In one implementation, the near-field device system may determine second risk information based on at least one second image from the second viewing angle.

The second risk information is a risk data set determined by the near-field device system based on the second image from the second viewing angle. The second risk information indicates a plurality of risk data of different dimensions, including, for example, a behavioral risk, a risk confidence, and a risk evolution trend.

For the manner of determining the second risk information, reference may be made to the manner of determining the first risk information, and the embodiments of the present disclosure will not elaborate on this herein.

It should be noted herein that in the embodiments of the present disclosure, the second risk information may indicate risk data of more or fewer dimensions, which is not limited in the embodiments of the present disclosure.

By adopting the implementation of this step, the near-field device system determines second risk information through the second image from the second viewing angle to further confirm the risk, thereby achieving more accurate risk prediction.

Step S400: determining a target risk based on the first risk information and the second risk information.

The near-field device system, by combining risk information from two different viewing angles, can accurately determine the target risk.

By way of example, based on the first image from the first viewing angle, the near-field device system can identify that an elderly person is in a stationary state in the bathroom. In this way, the first risk information obtained by the near-field device system indicates: a risk of illness due to the elderly person's back being stationary, a slip risk due to the elderly person's back being stationary and in a bathroom area, a relatively high risk confidence (for example, 0.8), and a risk evolution trend of the risk increasing. Furthermore, based on the second image from the second viewing angle, the near-field device system can identify that the elderly person is bending over to pick up an object. In this way, the second risk information obtained by the near-field device system indicates: no risk of illness due to upper limb movement of the elderly person, no slip risk due to upper limb movement of the elderly person in the bathroom area, a relatively low risk confidence (for example, 0.1), and a risk evolution trend of the risk not increasing.

Thus, based on the risk information from two different viewing angles, the near-field device system can determine the target risk as no risk, that is, no risk event has occurred with the elderly person.

By adopting the implementation of this step, the near-field device system analyzes risks based on the risk information obtained from images from multiple viewing angles, and can accurately determine risks, thereby enhancing user safety.

The risk determination method provided by the embodiments of the present disclosure determines, within a near-field device system, first risk information through a first image from a first viewing angle. In this way, through at least one of the behavioral risk, the risk confidence, and the risk evolution trend associated with the target object of the first image and the risk area in the first image as indicated by the first risk information, it can be determined that a risk exists in the risk space to be detected from the first viewing angle. Therefore, the near-field device proactively perceives the risk. Furthermore, upon determining the existence of a risk based on the first risk information, a second image from a second viewing angle different from the first viewing angle is obtained based on the near-field device. Second risk information is determined based on the second image from the second viewing angle. A target risk is determined based on the first risk information and the second risk information. The acquisition of an image from the second viewing angle is proactively triggered, further confirmation and prediction of the risk are achieved, and user safety is enhanced.

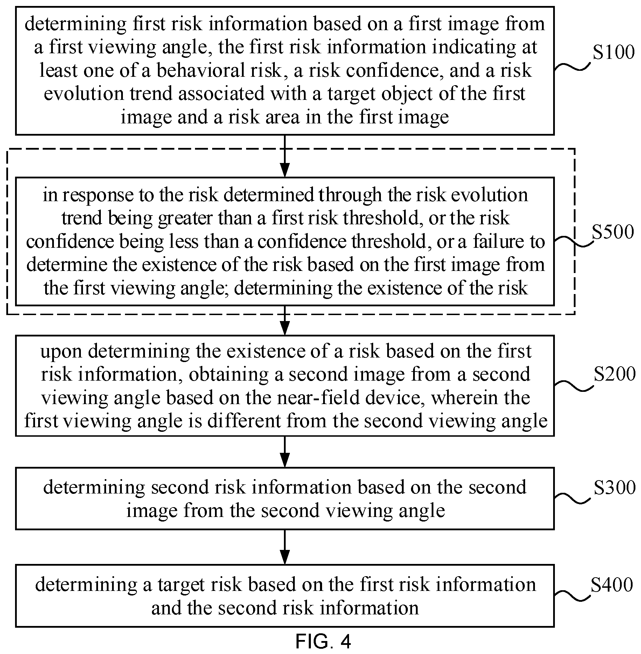

FIG. 4 is another schematic flowchart of a risk determination method provided by an exemplary embodiment of the present disclosure.

As shown in FIG. 4, in some embodiments, before step S200, upon determining the existence of a risk based on the first risk information, obtaining a second image from a second viewing angle based on the near-field device, the method further includes step S500.

Step S500: in response to the risk determined through the risk evolution trend being greater than a first risk threshold, or the risk confidence being less than a confidence threshold, or a failure to determine the existence of the risk based on the first image from the first viewing angle; determining the existence of the risk.

Step S500 illustrates three manners of setting the preset condition involved in the foregoing embodiments.

In one implementation, the near-field device system may quantify the risk determined based on the risk evolution trend to obtain a risk value, and then compare the risk value with a preset first risk threshold, so as to determine the existence of a risk when the risk is greater than the first risk threshold.

In this way, the near-field device system can determine the risk trend based on the quantified risk value, and then determine the existence of a risk when the risk trend rises to a certain degree (i.e., reaching the first risk threshold).

In one implementation, the near-field device system may determine image quality based on the first image from the first viewing angle, then determine the risk confidence based on the image quality, and further compare the risk confidence with a confidence threshold, so as to determine the existence of a risk when the risk confidence is less than the confidence threshold.

By way of example, in case of low light at night, the image quality of the first image acquired by the near-field device system is poor. The risk confidence determined based on this poor-quality image is, for example, 0.1, and the preset confidence threshold is, for example, 0.6. In this way, the risk confidence is less than the confidence threshold, and the near-field device system determines the existence of a risk.

It should be noted herein that the near-field device system may determine the risk confidence based on other metrics of the first image from the first viewing angle (for example, the proportion of occluded areas in the image). The embodiments of the present disclosure impose no limitation on the manner of determining the risk confidence.

In one implementation, when the near-field device system fails to determine the existence of a risk based on the first image from the first viewing angle, risk confirmation cannot be completed. Then, to ensure that no risk occurs, the system may first confirm the existence of a risk under this circumstance, thereby triggering the acquisition of the second image from the second viewing angle, and then further accurately confirm the risk.

By way of example, based on the first image from the first viewing angle, the near-field device system detects that a child has entered the kitchen. Since the child has not yet made contact with the knives at this point, the existence of a risk cannot be determined. However, to ensure that no risk occurs, the near-field device system may first confirm the existence of a risk under this circumstance, trigger the acquisition of the second image from the second viewing angle, and then further accurately confirm the risk.

By adopting the implementation of this step, after determining the existence of a risk based on different preset conditions, the near-field device system may trigger the acquisition of the second image from the second viewing angle. This on-demand triggering mechanism ensures proactive perception of risks while optimizing the energy consumption of the near-field device system.

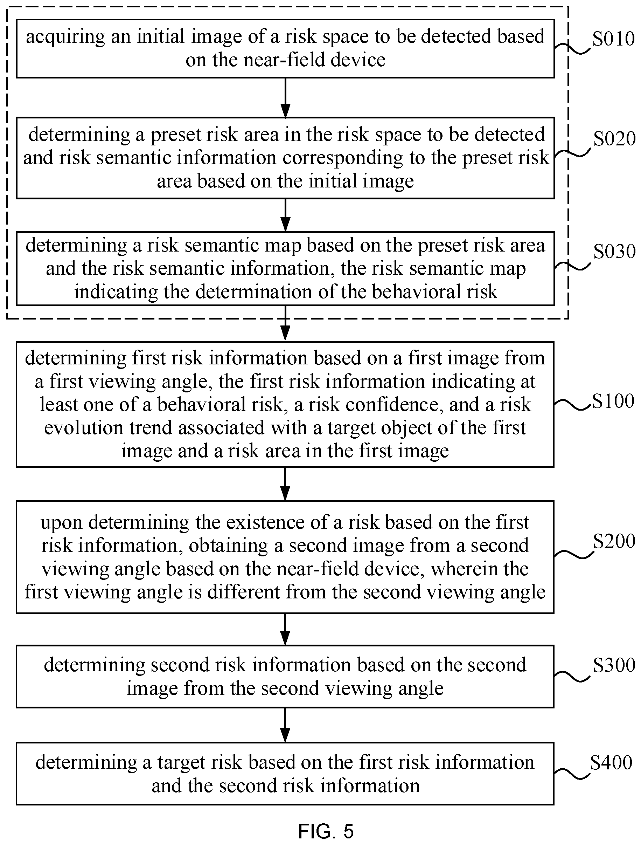

FIG. 5 is yet another schematic flowchart of a risk determination method provided by an exemplary embodiment of the present disclosure.

As shown in FIG. 5, in some embodiments, before step S100, determining first risk information based on a first image from a first viewing angle, the method further includes steps S010 to S030.

Step S010: acquiring an initial image of a risk space to be detected based on the near-field device.

The risk space to be detected may be a near-field environment, for example, an indoor near-field environment, and specifically may be a home environment.

The following embodiments of the present disclosure provide all exemplary descriptions using a home environment. The embodiments of the present disclosure impose no limitation on the specific spatial type of the risk space to be detected.

In one implementation, the near-field device system 100 as shown in FIG. 1, based on the near-field device being the second device 120, acquires an initial image of the risk space to be detected. The type of the initial image includes, for example, a 2D image. The 2D image is, for example, a color (RGB) image or a grayscale image.

In another implementation, the near-field device system 100 acquires an initial image of the risk space to be detected based on the near-field device being a depth camera. The type of the initial image further includes, for example, a depth image.

In another implementation, the near-field device system 100 acquires an initial image of the risk space to be detected based on the near-field device being a thermal imaging device. The type of the initial image further includes, for example, a thermal map.

In another implementation, the near-field device system 100 acquires an initial image of the risk space to be detected based on the near-field device being a robot vacuum cleaner. The type of the initial image further includes, for example, a Simultaneous Localization and Mapping (SLAM) map.

By adopting the implementation of this step, the near-field device system acquires an initial image of the risk space to be detected, which can be used for subsequent construction of a risk semantic map and a spatial risk relationship graph, serving as a basis for the risk determination method.

Step S020: determining a preset risk area in the risk space to be detected and risk semantic information corresponding to the preset risk area based on the initial image.

A preset risk area is an area in the risk space to be detected that is marked based on the initial image and has a higher probability of risk occurrence.

Risk semantic information refers to safety attribute labels corresponding to the preset risk area.

By way of example, preset risk areas may include a kitchen knife area, a balcony edge area, a bathroom area, a cat litter area, etc. The embodiments of the present disclosure impose no limitation on the manner of setting the preset risk areas.

The risk semantic information may include: a sharp instrument risk corresponding to the kitchen knife area, a fall risk corresponding to the balcony edge area, a slip risk corresponding to the bathroom area, and a contamination diffusion risk corresponding to the cat litter area.

By adopting the implementation of this step, the near-field device system determines the preset risk area and risk semantic information corresponding to the preset risk area, which can be used for subsequent construction of a risk semantic map, serving as a basis for the risk determination method.

Step S030: determining a risk semantic map based on the preset risk area and the risk semantic information, the risk semantic map indicating the determination of the behavioral risk.

The risk semantic map is used to represent the mapping relationship between the preset risk area and the risk semantic information.

In one implementation, the near-field device system establishes a mapping relationship between the preset risk area and the risk semantic information to generate the risk semantic map.

By way of example, the near-field device system may generate the risk semantic map based on the mapping relationship between the kitchen knife area and the sharp instrument risk, the mapping relationship between the balcony edge area and the fall risk, the mapping relationship between the bathroom area and the slip risk, and the mapping relationship between the cat litter area and the contamination diffusion risk.

The risk semantic map may serve as a basis for subsequent generation of a spatial risk relationship graph.

By adopting the implementation of this step, the near-field device system constructs a risk semantic map through the preset risk area and risk semantic information, so that in the subsequent risk confirmation process, the near-field device system can quickly perform risk prediction when the target object enters a preset risk area.

The technical solution shown in the present disclosure enables the near-field device system to determine preset risk areas and risk semantic information from an initial image, and then establish mapping relationships between the preset risk area and the risk semantic information, thereby generating a risk semantic map. In this way, not only is the subsequent further construction of a spatial risk relationship graph facilitated, but also quick risk prediction based on risk semantic information can be performed when the target object enters a preset risk area.

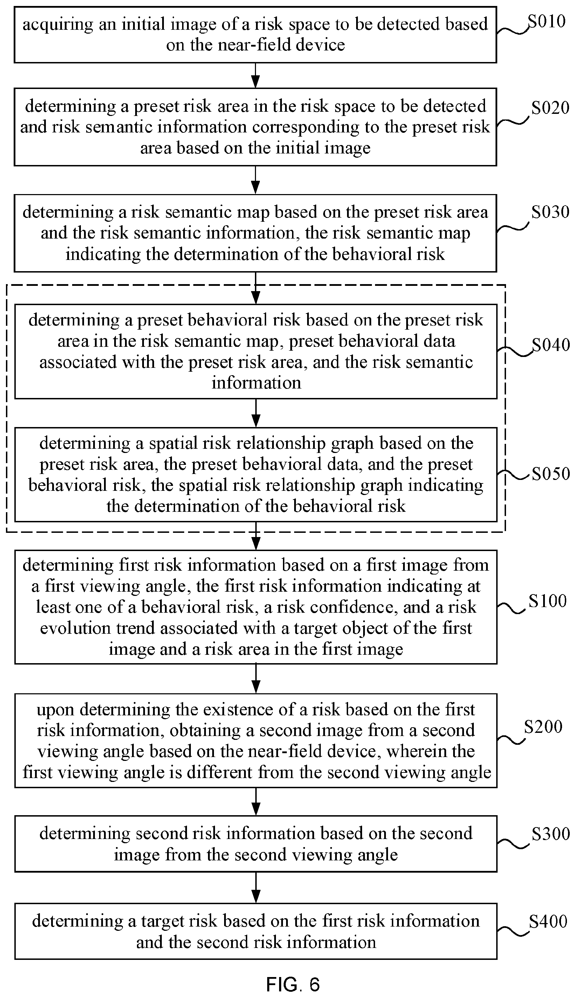

FIG. 6 is yet another schematic flowchart of a risk determination method provided by an exemplary embodiment of the present disclosure.

As shown in FIG. 6, in some embodiments, after step S030, determining a risk semantic map based on the preset risk area and the risk semantic information, the method further includes steps S040 to S050.

Step S040: determining a preset behavioral risk based on the preset risk area in the risk semantic map, preset behavioral data associated with the preset risk area, and the risk semantic information.

Preset behavioral data is used to indicate a behavior that is likely to trigger a danger, for example, a child approaching behavior.

A preset behavioral risk may be a risk obtained by further analysis on the basis of the risk semantic map and in combination with the preset behavioral data. For example, the preset behavioral risk is an injury risk.

By adopting the implementation of this step, the near-field device system determines a preset behavioral risk, which can be used for subsequent construction of a spatial risk relationship graph, serving as a basis for the risk determination method.

Step S050: determining a spatial risk relationship graph based on the preset risk area, the preset behavioral data, and the preset behavioral risk, the spatial risk relationship graph indicating the determination of the behavioral risk.

The spatial risk relationship graph is used to represent a mapping relationship among the preset risk area, the preset behavioral data, and the preset behavioral risk.

In one implementation, the near-field device system establishes a mapping relationship among the preset risk area, the preset behavioral data, and the preset behavioral risk to generate the spatial risk relationship graph.

By way of example, the near-field device system may generate the spatial risk relationship graph based on the mapping relationship among the kitchen knife area, the child approaching behavior, and the injury risk, and the mapping relationship among the tabletop water cup area, the pet activity behavior, and the spill risk.

The embodiments of the present disclosure impose no limitation on the type and the number of mapping relationships included in the spatial risk relationship graph.

In this way, the near-field device system, through the spatial risk relationship graph, can understand the position of a risk area, the type of risk present in the risk area, and the behavior that triggers the risk.

By adopting the implementation of this step, the near-field device system constructs a spatial risk relationship graph through the preset risk area, the preset behavioral data, and preset behavioral risk, so that in the subsequent risk confirmation process, the near-field device system can quickly perform risk prediction when the target object enters a preset risk area.

The technical solution shown in the present disclosure enables the near-field device system to first determine a preset behavioral risk, and then construct a spatial risk relationship graph in combination with the preset risk area and preset behavioral data, thereby establishing a more complex mapping relationship on the basis of the risk semantic map, which can enhance the accuracy of risk prediction.

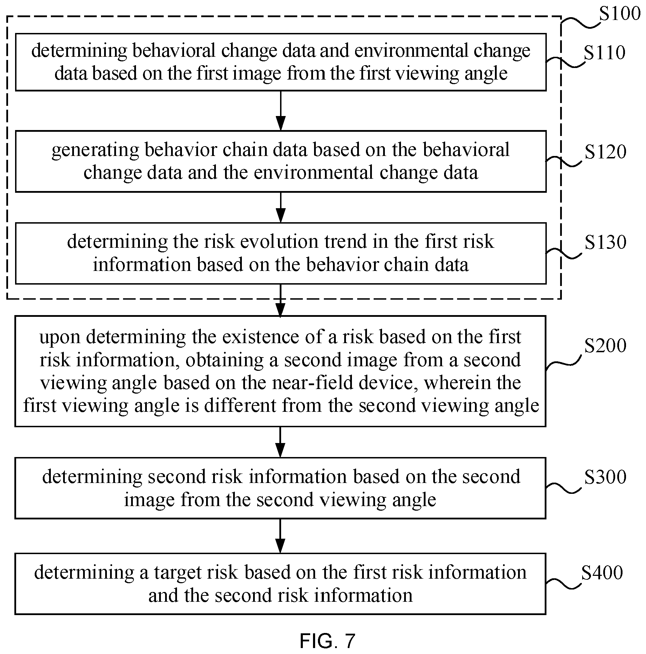

FIG. 7 is a schematic flowchart of step S100 provided by an exemplary embodiment of the present disclosure.

As shown in FIG. 7, in some embodiments, step S100, determining first risk information based on a first image from a first viewing angle, includes steps S110 to S130.

Step S110: determining behavioral change data and environmental change data based on the first image from the first viewing angle.

In one implementation, the near-field device system continuously acquires first images from the first viewing angle to determine behavioral change data and environmental change data.

Behavioral change data refers to a set of dynamic features reflecting state changes extracted from the actions, postures, and activity trajectories of a target object (such as an elderly person, a child, or a pet) along a time axis.

By way of example, the behavioral change data includes user behavioral data and pet behavioral data.

The user behavioral data includes, for example, user walking trajectory data, user staying position data, user posture change data, and user approaching-dangerous-area behavior data.

The pet behavioral data includes, for example, jumping behavior data, approaching-tabletop behavior data, and high-frequency activity area behavior data.

The embodiments of the present disclosure impose no limitation on the data types of the behavioral change data.

Environmental change data refers to a dynamic change in an external objective condition (for example, door opening/closing, water cup movement, lighting change) produced by a non-target object (for example, a door, a water cup, lighting) in the near-field environment that may induce or aggravate risks.

By way of example, the environmental change data includes door opening/closing change data, water cup movement change data, and lighting change data.

The embodiments of the present disclosure impose no limitation on the data types of the environmental change data.

By adopting the implementation of this step, the near-field device system can use the behavioral change data and the environmental change data as a basis for risk determination.

Step S120: generating behavior chain data based on the behavioral change data and the environmental change data.

The behavior chain data is a structured data set formed by the near-field device system by concatenating a series of interrelated actions, reactions, and state changes of a target object (such as an elderly person, a child, or a pet) occurring within a specific time window in chronological order, based on time-sequenced behavioral change data and environmental change data. The behavior chain data reflects the complete trajectory and logical association of the behavioral evolution of the target object.

Specifically, since the behavioral change data and the environmental change data have a temporal correspondence and a spatial correspondence, the near-field device system can combine the behavioral change data and the environmental change data based on the relationship of a chronological order, a spatial change, and behavioral continuity, etc., to generate the behavior chain data.

By way of example, based on the combination of the behavioral change data and the environmental change data, the near-field device system can determine a series of behaviors changing over time and space, such as the elderly person getting out of bed, unstable gait of the elderly person, and the elderly person walking while supporting against a wall. In this way, a fall risk behavior chain can be generated.

By way of example, based on the combination of the behavioral change data and the environmental change data, the near-field device system may further determine a series of behaviors changing over time and space, such as a child entering the kitchen, a child approaching the knife area, and a child reaching action. In this way, a dangerous contact behavior chain can be generated.

By way of example, based on the combination of the behavioral change data and the environmental change data, the near-field device system may further determine a series of behaviors changing over time and space, such as a pet approaching the table edge, a water cup present on the tabletop, and the pet jumping. In this way, a knocking-over risk behavior chain may be generated.

By adopting the implementation of this step, the near-field device system, through the generated behavior chain data, can facilitate continuous behavioral analysis for subsequent accurate risk confirmation.

Step S130: determining the risk evolution trend in the first risk information based on the behavior chain data.

In one implementation, the near-field device system determines the risk evolution trend in the first risk information based on the behavior chain data, the spatial risk relationship graph, and historical risk data.

By way of example, upon determining, through the matching between the behavior chain data and the spatial risk relationship graph, that gait tremor of the elderly person has increased and the elderly person is in the wet and slippery area of the bathroom, the near-field device system may infer, in combination with historical risk data, that the risk evolution trend of the fall risk in the first risk information rises from a medium level to a high level.

By way of example, upon determining, through the matching between the behavior chain data and the spatial risk relationship graph, that there is cat litter contamination and the cat is in a moving state, the near-field device system may infer, in combination with historical risk data, that the risk evolution trend of the contamination diffusion risk in the first risk information continues to rise.

By way of example, upon determining, through the matching between the behavior chain data and the spatial risk relationship graph, that a child continuously approaches a dangerous area, the near-field device system may infer, in combination with historical risk data, that the risk evolution trend of the child danger risk in the first risk information continues to rise. By adopting the implementation of this step, the near-field device system determines the risk evolution trend through the behavior chain data, enabling better risk understanding capability and thereby achieving risk prediction.

By adopting the implementation of this step, the near-field device system can understand the evolution process of risk events through the behavior chain data and then infer the risk evolution trend. In this way, the near-field device system can accurately perform risk prediction.

The technical solution shown in the present disclosure enables the near-field device system to achieve proactive risk prediction by generating a risk evolution trend, thereby greatly enhancing the accuracy of risk identification and the timeliness of intervention.

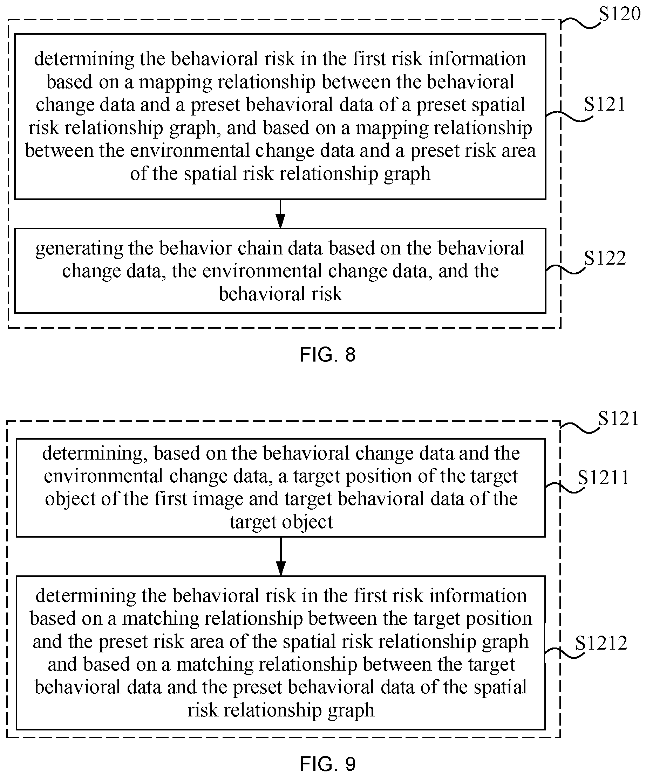

FIG. 8 is a schematic flowchart of step S120 provided by an exemplary embodiment of the present disclosure.

As shown in FIG. 8, in some embodiments, step S120, generating behavior chain data based on the behavioral change data and the environmental change data, includes steps S121 to S122.

Step S121: determining the behavioral risk in the first risk information based on a mapping relationship between the behavioral change data and preset behavioral data of a preset spatial risk relationship graph, and based on a mapping relationship between the environmental change data and a preset risk area of the spatial risk relationship graph.

The behavioral change data and the environmental change data are associated through mapping to the spatial risk relationship graph.

When the near-field device system maps both the behavioral change data and the environmental change data to the spatial risk relationship graph, the behavioral change data and the environmental change data can further determine the corresponding behavioral risk based on the spatial risk relationship graph. In this way, the association among the behavioral change data, the environmental change data, and the behavioral risk is achieved.

By adopting the implementation of this step, the manner of obtaining the basic elements of the behavior chain data is illustrated.

Step S122: generating the behavior chain data based on the behavioral change data, the environmental change data, and the behavioral risk.

In one implementation, the near-field device system establishes a mapping relationship among the behavioral change data, the environmental change data, and the behavioral risk to generate the behavior chain data.

By way of example, based on the combination of the behavioral change data and the environmental change data, the near-field device system may first determine a series of behaviors changing over time and space, such as an elderly person getting out of bed, unstable gait of the elderly person, and the elderly person walking while supporting against a wall, then determine that the current behavior corresponds to a fall risk, and thereby generating a fall risk behavior chain.

By way of example, based on the combination of the behavioral change data and the environmental change data, the near-field device system may further first determine a series of behaviors changing over time and space, such as a child entering the kitchen, the child approaching the knife area, and the child reaching action, then determine that the current behavior corresponds to a dangerous contact behavior, and thereby generating a dangerous contact behavior chain.

By way of example, based on the combination of the behavioral change data and the environmental change data, the near-field device system may further first determine a series of behaviors changing over time and space, such as a pet approaching the table edge, a water cup present on the tabletop, and the pet jumping, then determine that the current behavior corresponds to a knocking-over risk behavior, and thereby generating a knocking-over risk behavior chain.

By adopting the implementation of this step, the specific manner of generating the behavior chain data is illustrated. In this way, the near-field device system can perform continuous behavioral analysis for subsequent accurate risk confirmation.

The technical solution shown in the present disclosure enables the near-field device system to proactively perceive and understand risks by generating behavior chain data, thereby achieving risk prediction.

FIG. 9 is a schematic flowchart of step S121 provided by an exemplary embodiment of the present disclosure.

As shown in FIG. 9, in some embodiments, step S121, determining the behavioral risk in the first risk information based on a mapping relationship between the behavioral change data and preset behavioral data of a preset spatial risk relationship graph, and based on a mapping relationship between the environmental change data and a preset risk area of the spatial risk relationship graph, includes steps S1211 to S1212.

Step S1211: determining, based on the behavioral change data and the environmental change data, a target position of the target object of the first image and target behavioral data of the target object.

The near-field device system, by analyzing the behavioral change data and the environmental change data to obtain the target position and the target behavioral data of the target object, can achieve mapping with the spatial risk relationship graph.

By adopting the implementation of this step, the target position and the target behavioral data of the target object obtained by the near-field device from the analysis of the behavioral change data and the environmental change data are illustrated. In this way, such data can be used for matching with the spatial risk relationship graph for subsequent generation of behavior chain data, thereby enabling the near-field device system to proactively understand and perceive a risk.

Step S1212: determining the behavioral risk in the first risk information based on a matching relationship between the target position and the preset risk area of the spatial risk relationship graph and based on a matching relationship between the target behavioral data and the preset behavioral data of the spatial risk relationship graph.

By adopting the implementation of this step, the manner of matching the behavioral change data and the environmental change data with the spatial risk relationship graph is more specifically illustrated. In this way, the near-field device system can map the behavioral change data and the environmental change data to the spatial risk relationship graph, thereby determining the corresponding behavioral risk and achieving the association among the behavioral change data, the environmental change data, and the behavioral risk.

The technical solution shown in the present disclosure illustrates the manner of determining the behavioral risk. In this way, the near-field device system can conveniently perform risk prediction based on the behavioral risk.

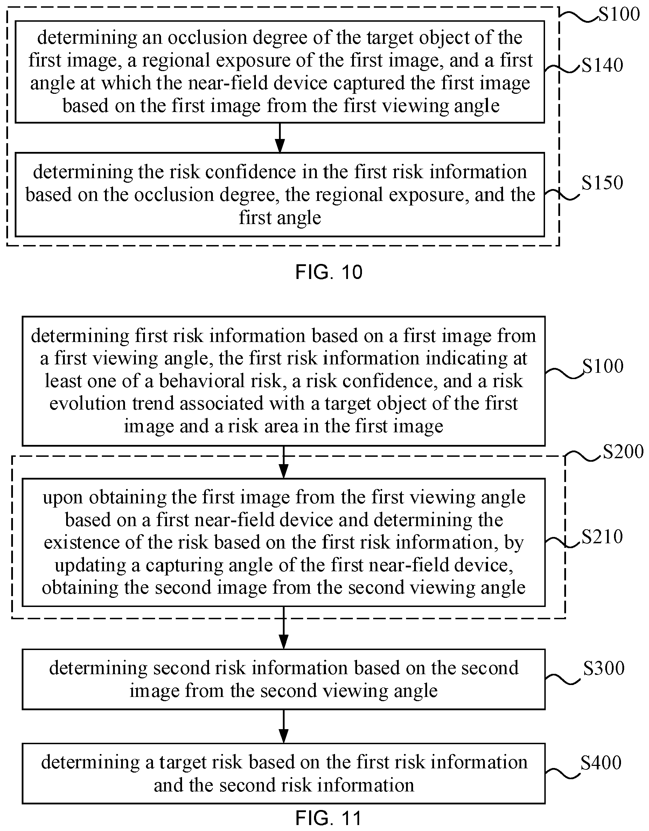

FIG. 10 is another schematic flowchart of step S100 provided by an exemplary embodiment of the present disclosure.

As shown in FIG. 10, in some embodiments, step S100, determining first risk information based on a first image from a first viewing angle, further includes steps S140 to S150.

Step S140: determining an occlusion degree of the target object of the first image, a regional exposure of the first image, and a first angle at which the near-field device captured the first image based on the first image from the first viewing angle.

First, a description is given below of the manner in which the near-field device system determines the occlusion degree of the target object based on the first image from the first viewing angle.

By way of example, the target object is an elderly person, and the lower half of the elderly person's body is occluded by a sofa. The near-field device system can then determine the occlusion degree of the elderly person based on the pixel region corresponding to the elderly person in the image and the pixel region corresponding to the sofa.

Furthermore, the manner in which the near-field device system determines the regional exposure of the first image based on the first image from the first viewing angle is described.

By way of example, the near-field device system determines the regional exposure of the kitchen area in the first image based on the illumination level of the kitchen area at night.

Furthermore, the manner in which the near-field device system determines the first angle at which the near-field device captured the first image based on the first image from the first viewing angle is described.

By way of example, the near-field device is the second device 120 as shown in FIG. 1. When the second device 120 does not have a rotation function, the near-field device system can determine the first angle as a fixed angle.

By adopting the implementation of this step, the near-field device system can identify perception blind zone and risk uncertainty areas based on the occlusion degree of the target object of the first image, the regional exposure of the first image, and the first angle at which the near-field device captured the first image.

Step S150: determining the risk confidence in the first risk information based on the occlusion degree, the regional exposure, and the first angle.

In one implementation, the near-field device system determines the risk confidence in the first risk information based on Formula 1. Formula 1: $RiskConfidence = w 1 * V + w 2 * O + w 3 * B + w 4 * S + w 5 * M + w 6 * H ,$

wherein RiskConfidence is the risk confidence, V is the visual perception credibility, O is the occlusion credibility, B is the behavior chain completeness, S is the risk semantic matching degree, M is the multi-device consistency, and H is the historical behavior matching degree. w1, w2, w3, w4, w5, and w6 are weights corresponding to the respective parameters.

It should be noted herein that the occlusion credibility O is determined based on the occlusion degree; the visual perception credibility V is determined based on the regional exposure; the multi-device consistency M is determined based on the first angle; the behavior chain completeness B is determined by evaluating the aforementioned behavior chain; the risk semantic matching degree S is determined based on the degree of matching of the aforementioned behavioral change data and environmental change data with the spatial risk relationship graph; and the historical behavior matching degree H is determined based on historical risk data.

By adopting the implementation of this step, the near-field device system, by determining the risk confidence, can facilitate comparing the risk confidence with the confidence threshold to preliminarily determine whether a risk exists.

FIG. 11 is a schematic flowchart of step S200 provided by an exemplary embodiment of the present disclosure.

As shown in FIG. 11, in some embodiments, step S200, upon determining the existence of a risk based on the first risk information, obtaining a second image from a second viewing angle based on the near-field device, includes step S210.

Step S210: upon obtaining the first image from the first viewing angle based on a first near-field device and determining the existence of the risk based on the first risk information, by updating a capturing angle of the first near-field device, obtaining the second image from the second viewing angle.

In one implementation, when the first near-field device is the second device 120 as shown in FIG. 1 and the second device 120 is a rotatable camera, the second image from a supplementary viewing angle (i.e., the second viewing angle) can be obtained by adjusting the capturing angle of the second device 120.

By adopting the implementation of this step, images from a supplementary viewing angle can be obtained at low cost and quickly.

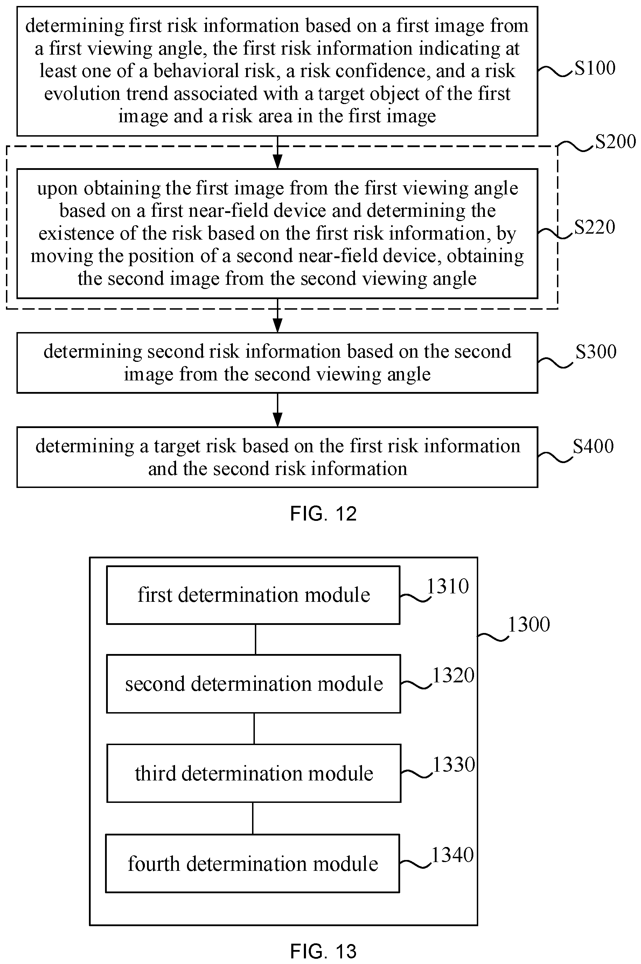

FIG. 12 is another schematic flowchart of step S200 provided by an exemplary embodiment of the present disclosure.

As shown in FIG. 12, in some embodiments, step S200, upon determining the existence of a risk based on the first risk information, obtaining a second image from a second viewing angle based on the near-field device, includes step S220.

Step S220: upon obtaining the first image from the first viewing angle based on a first near-field device and determining the existence of the risk based on the first risk information, by moving the position of a second near-field device, obtaining the second image from the second viewing angle.

In one implementation, when the first near-field device is the second device 120 as shown in FIG. 1 and the second device 120 is a fixed camera, the second near-field device (for example, the third device 130 as shown in FIG. 1) can be invoked to move the second near-field device, thereby obtaining the second image from a supplementary viewing angle (i.e., the second viewing angle).

It should be noted herein that the second near-field device may further include a patrol robot, a pan-tilt camera, and other devices capable of changing the camera orientation. The embodiments of the present disclosure impose no limitation on the device type of the second near-field device.

By adopting the implementation of this step, the near-field device system can proactively generate a new observation demand and dynamically schedule a second near-field device capable of changing the camera orientation to acquire an image from a supplementary viewing angle for risk confirmation.

**In** one implementation, after step S400, determining a target risk based on the first risk information and the second risk information, the method further includes step S600.

Step S600: upon the target risk being a preset intervention risk, performing a risk intervention action.

The risk intervention action is used to prompt the user to avoid the risk.

The target risk may include no risk, or may be a preset intervention risk (for example, a child dangerous behavior, or an elderly person fall risk).

By way of example, when the target risk is a child dangerous behavior (for example, a child is about to make contact with a knife), the near-field device system performs a risk intervention action of playing a warning message. The warning message is, for example: "Please stay away from the dangerous area."

By way of example, when the target risk is an elderly person fall risk (for example, the elderly person has been lying on the ground for an extended period of time), the near-field device system performs risk intervention actions such as calling family members, turning on lights, and initiating a voice inquiry.

The embodiments of the present disclosure impose no limitation on the action types of the risk intervention actions.

By adopting the implementation of this step, the near-field device system achieves risk prediction and risk intervention, enabling the user to avoid risks in a timely manner before a risk event occurs, thereby enhancing user safety.

The solutions involved in the present disclosure are not limited to the above-mentioned embodiments.

### Exemplary Apparatus

The risk determination method provided by the embodiments of the present disclosure has been described above. It can be understood that, in order to implement the respective functions of the risk determination method, the risk determination apparatus may include corresponding hardware and software for implementing the functions of the hardware.

Those skilled in the art should readily appreciate that, in combination with the steps of the risk determination method described in the various embodiments of the present disclosure, the various embodiments of the present disclosure can be implemented in the form of hardware, in the form of software driving hardware, or in the form of a combination of software and hardware. Whether a particular function is performed by hardware or by software driving the hardware depends on the specific application and design constraints of the technical solution. A person skilled in the art may use different methods to implement the described functions for each specific application, but such implementation should not be considered as exceeding the scope of the present disclosure.

FIG. 13 is a schematic structural diagram of a risk determination apparatus provided by an exemplary embodiment of the present disclosure.

As shown in FIG. 13, in some embodiments, the risk determination apparatus 1300 includes:
a first determination module 1310, configured to determine first risk information based on a first image from a first viewing angle, the first risk information indicating at least one of a behavioral risk, a risk confidence, and a risk evolution trend associated with a target object of the first image and a risk area in the first image;
a second determination module 1320, configured to, upon determining the existence of a risk based on the first risk information, obtain a second image from a second viewing angle based on a near-field device, wherein the first viewing angle is different from the second viewing angle;
a third determination module 1330, configured to determine second risk information based on the second image from the second viewing angle; and
a fourth determination module 1340, configured to determine a target risk based on the first risk information and the second risk information.

The risk determination apparatus 1300 provided by the embodiments of the present disclosure determines, within a near-field device system, first risk information through a first image from a first viewing angle. In this way, through at least one of the behavioral risk, the risk confidence, and the risk evolution trend associated with the target object of the first image and the risk area in the first image as indicated by the first risk information, it can be determined that a risk exists in the risk space to be detected from the first viewing angle. Therefore, the near-field device proactively perceives the risk. Furthermore, upon determining the existence of a risk based on the first risk information, a second image from a second viewing angle different from the first viewing angle is obtained based on the near-field device. Second risk information is determined based on the second image from the second viewing angle. A target risk is determined based on the first risk information and the second risk information. In this way, the acquisition of an image from the second viewing angle is proactively triggered, further confirmation of the risk is achieved, risk prediction is completed, and user safety is enhanced.

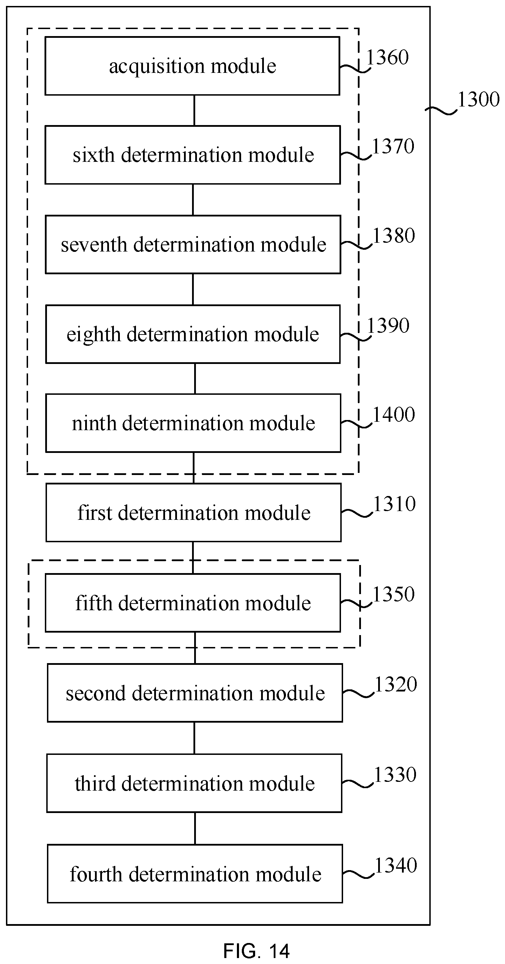

FIG. 14 is another schematic structural diagram of a risk determination apparatus provided by an exemplary embodiment of the present disclosure.

As shown in FIG. 14, in some embodiments, the risk determination apparatus 1300 further includes:
a fifth determination module 1350, configured to, in response to the risk determined through the risk evolution trend being greater than a first risk threshold, or the risk confidence being less than a confidence threshold, or a failure to determine the existence of the risk based on the first image from the first viewing angle, determine the existence of the risk.

In some embodiments, the risk determination apparatus 1300 further includes:
an acquisition module 1360, configured to acquire an initial image of a risk space to be detected based on a near-field device;
a sixth determination module 1370, configured to determine a preset risk area in the risk space to be detected and risk semantic information corresponding to the preset risk area based on the initial image; and
a seventh determination module 1380, configured to determine a risk semantic map based on the preset risk area and the risk semantic information, the risk semantic map indicating the determination of the behavioral risk.

In some embodiments, the risk determination apparatus 1300 further includes:
an eighth determination module 1390, configured to determine a preset behavioral risk based on the preset risk area in the risk semantic map, preset behavioral data associated with the preset risk area, and the risk semantic information; and
a ninth determination module 1400, configured to determine a spatial risk relationship graph based on the preset risk area, the preset behavioral data, and the preset behavioral risk, the spatial risk relationship graph indicating the determination of the behavioral risk.

In some embodiments, the first determination module 1310 is further configured to: determine behavioral change data and environmental change data based on the first image from the first viewing angle; generate behavior chain data based on the behavioral change data and the environmental change data; and determine the risk evolution trend in the first risk information based on the behavior chain data.

In some embodiments, the first determination module 1310 is further configured to: determine the behavioral risk in the first risk information based on a mapping relationship between the behavioral change data and preset behavioral data of a preset spatial risk relationship graph, and based on a mapping relationship between the environmental change data and a preset risk area of the spatial risk relationship graph; and generate the behavior chain data based on the behavioral change data, the environmental change data, and the behavioral risk.

In some embodiments, the first determination module 1310 is further configured to: determine a target position of the target object of the first image and target behavioral data of the target object based on the behavioral change data and the environmental change data; and determine the behavioral risk in the first risk information based on a matching relationship between the target position and the preset risk area of the spatial risk relationship graph and based on a matching relationship between the target behavioral data and the preset behavioral data of the spatial risk relationship graph.

In some embodiments, the first determination module 1310 is further configured to: determine an occlusion degree of the target object of the first image, a regional exposure of the first image, and a first angle at which the near-field device captured the first image based on the first image from the first viewing angle; and determine the risk confidence in the first risk information based on the occlusion degree, the regional exposure, and the first angle.

In some embodiments, the second determination module 1320 is further configured to: upon obtaining the first image from the first viewing angle based on a first near-field device and determining the existence of the risk based on the first risk information, update a capturing angle based on the first near-field device to obtain the second image from the second viewing angle.

In some embodiments, the second determination module 1320 is further configured to: upon obtaining the first image from the first viewing angle based on a first near-field device and determining the existence of the risk based on the first risk information, by moving the position of a second near-field device, obtain the second image from the second viewing angle.

The beneficial technical effects of the exemplary apparatus embodiments can be found in the corresponding beneficial technical effects in the above exemplary methods section, and will not be repeated herein.

### Exemplary Electronic Device

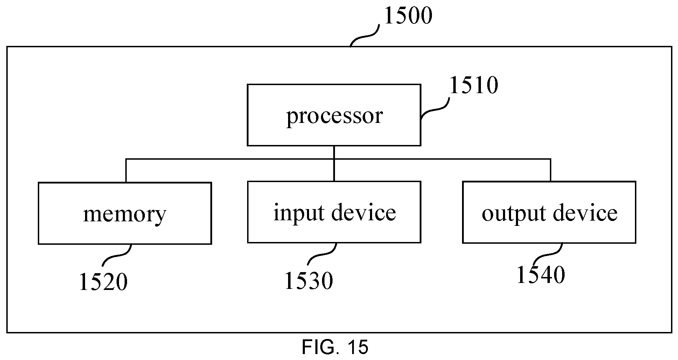

FIG. 15 is a structural diagram of an electronic device provided by an embodiment of the present disclosure.

As shown in FIG. 15, the electronic device 1500 includes at least one processor 1510 and a memory 1520.

The processor 1510 may be a central processing unit (CPU) or another form of processing unit having data processing capability and/or instruction execution capability, and may control other components in the electronic device 1500 to perform desired functions.

The memory 1520 may include one or more computer program products. The computer program products may include various forms of computer-readable storage media, such as volatile memory and/or non-volatile memory. The volatile memory may include, for example, random access memory (RAM) and/or cache memory. The non-volatile memory may include, for example, read-only memory (ROM), a hard disk, flash memory, etc. One or more computer program instructions may be stored on the computer-readable storage media. The processor 1510 may execute the one or more computer program instructions to implement the risk determination method and/or other desired functions of the various embodiments of the present disclosure described above.

In one example, the electronic device 1500 may further include: an input device 1530 and an output device 1540, and these components are interconnected through a bus system and/or other forms of connection mechanisms (not shown).

The input device 1530 may include, for example, a keyboard, a mouse, etc.

The output device 1540 may output various kinds of information to the outside, and may include, for example, a display, a speaker, a printer, and a communication network and remote output devices connected thereto, etc.

Of course, for the sake of simplicity, FIG. 15 only shows some of the components of the electronic device 1500 that are relevant to the present disclosure, and components such as a bus, an input/output interface, etc. are omitted. In addition, depending on specific applications, the electronic device 1500 may further include any other appropriate components.

### Exemplary Computer Program Product and Computer-Readable Storage Medium

**In** addition to the above method and device, embodiments of the present disclosure may also provide a computer program product, including computer program instructions, which, when executed by a processor, cause the processor to perform the steps of the risk determination method of the various embodiments of the present disclosure described in the "Exemplary Method" section above.

The computer program product may be written in program code for performing operations of the embodiments of the present disclosure in any combination of one or more programming languages, the programming languages including object-oriented programming languages, such as Java, C++, etc., as well as conventional procedural programming languages, such as the "C" programming language or similar programming languages. The program code may execute entirely on the user's computing device, partially on the user's device, as a stand-alone software package, partially on the user's computing device and partially on a remote computing device, or entirely on the remote computing device or server.

**In** addition, embodiments of the present disclosure may also be a computer-readable storage medium having computer program instructions stored thereon, which, when executed by a processor, cause the processor to perform the steps of the risk determination method of the various embodiments of the present disclosure described in the "Exemplary Method" section above.

The computer-readable storage medium may employ any combination of one or more readable media. The readable media may be a readable signal medium or a readable storage medium. The readable storage medium may include, but is not limited to, for example, an electrical, magnetic, optical, electromagnetic, infrared, or semiconductor system, apparatus, or device, or any combination of the above. More specific examples (a non-exhaustive list) of the readable storage medium include: an electrical connection having one or more wires, a portable disk, a hard disk, random access memory (RAM), read-only memory (ROM), erasable programmable read-only memory (EPROM or flash memory), an optical fiber, a portable compact disc read-only memory (CD-ROM), an optical storage device, a magnetic storage device, or any suitable combination of the above.

The basic principles of the present disclosure have been described above in conjunction with specific embodiments. However, the advantages, beneficial effects, etc., mentioned in the present disclosure are only exemplary rather than limiting, and should not be considered as necessarily possessed by the various embodiments of the present disclosure. Furthermore, the specific details disclosed above are for purposes of illustration and ease of understanding only, and are not limiting. The above details do not limit the present disclosure to be necessarily implemented using the above specific details.

Those skilled in the art may make various changes and modifications to the present disclosure without departing from the spirit and scope of this application. Thus, if these modifications and variations of this application fall within the scope of the claims of the present disclosure and their equivalents, the present disclosure is also intended to encompass these changes and modifications.

## Claims

1. A risk determination method, applied to a near-field device system, the near-field device system comprising at least one near-field device, the method comprising:
determining (S100) first risk information based on a first image from a first viewing angle, the first risk information indicating at least one of a behavioral risk, a risk confidence, and a risk evolution trend associated with a target object of the first image and a risk area in the first image;
upon determining the existence of a risk based on the first risk information, obtaining (S200) a second image from a second viewing angle based on the near-field device, wherein the first viewing angle is different from the second viewing angle;
determining (S300) second risk information based on the second image from the second viewing angle; and
determining (S400) a target risk based on the first risk information and the second risk information.

2. The risk determination method according to claim 1, wherein before the obtaining (S200) a second image from a second viewing angle based on the near-field device, upon determining the existence of a risk based on the first risk information, the method further comprises:
in response to the risk determined through the risk evolution trend being greater than a first risk threshold; or the risk confidence being less than a confidence threshold; or
a failure to determine the existence of the risk based on the first image from the first viewing angle, determining (S500) the existence of the risk.

3. The risk determination method according to claim 1, wherein before the determining (S100) first risk information based on a first image from a first viewing angle, the method further comprises:
acquiring (S010) an initial image of a risk space to be detected based on the near-field device;
determining (S020), based on the initial image, a preset risk area in the risk space to be detected and risk semantic information corresponding to the preset risk area; and
determining (S030) a risk semantic map based on the preset risk area and the risk semantic information, the risk semantic map indicating the determination of the behavioral risk.

4. The risk determination method according to claim 3, wherein after the determining (S030) a risk semantic map based on the preset risk area and the risk semantic information, the method further comprises:
determining (S040) a preset behavioral risk based on the preset risk area in the risk semantic map, preset behavioral data associated with the preset risk area, and the risk semantic information; and
determining (S050) a spatial risk relationship graph based on the preset risk area, the preset behavioral data, and the preset behavioral risk, the spatial risk relationship graph indicating the determination of the behavioral risk.

5. The risk determination method according to claim 1, wherein the determining (S100) first risk information based on a first image from a first viewing angle comprises:
determining (S110) behavioral change data and environmental change data based on the first image from the first viewing angle;
generating (S120) behavior chain data based on the behavioral change data and the environmental change data; and
determining (S130) the risk evolution trend in the first risk information based on the behavior chain data.

6. The risk determination method according to claim 5, wherein the generating (S120) behavior chain data based on the behavioral change data and the environmental change data comprises:
determining (S121) the behavioral risk in the first risk information based on a mapping relationship between the behavioral change data and preset behavioral data of a preset spatial risk relationship graph, and based on a mapping relationship between the environmental change data and a preset risk area of the spatial risk relationship graph; and
generating (S122) the behavior chain data based on the behavioral change data, the environmental change data, and the behavioral risk.

7. The risk determination method according to claim 6, wherein the determining (S121) the behavioral risk in the first risk information based on a mapping relationship between the behavioral change data and preset behavioral data of a preset spatial risk relationship graph, and based on a mapping relationship between the environmental change data and a preset risk area of the spatial risk relationship graph, comprises:
determining (S1211), based on the behavioral change data and the environmental change data, a target position of the target object of the first image and target behavioral data of the target object; and
determining (S1212) the behavioral risk in the first risk information based on a matching relationship between the target position and the preset risk area of the spatial risk relationship graph and based on a matching relationship between the target behavioral data and the preset behavioral data of the spatial risk relationship graph.

8. The risk determination method according to claim 1, wherein the determining (S100) first risk information based on a first image from a first viewing angle comprises:
determining (S140) an occlusion degree of the target object of the first image, a regional exposure of the first image, and a first angle at which the near-field device captured the first image based on the first image from the first viewing angle; and
determining (S150) the risk confidence in the first risk information based on the occlusion degree, the regional exposure, and the first angle.

9. The risk determination method according to claim 1, wherein the obtaining (S200) a second image from a second viewing angle based on the near-field device upon determining the existence of a risk based on the first risk information comprises:
upon obtaining the first image from the first viewing angle based on a first near-field device and determining the existence of the risk based on the first risk information, by updating a capturing angle of the first near-field device, obtaining (S210) the second image from the second viewing angle.

10. The risk determination method according to claim 1, wherein the obtaining (S200) a second image from a second viewing angle based on the near-field device upon determining the existence of a risk based on the first risk information comprises:
upon obtaining the first image from the first viewing angle based on a first near-field device and determining the existence of the risk based on the first risk information, by moving the position of a second near-field device, obtaining (S220) the second image from the second viewing angle.

11. A risk determination apparatus (1300), applied to a near-field device system, the near-field device system comprising at least one near-field device, the apparatus comprising:
a first determination module (1310), configured to determine first risk information based on a first image from a first viewing angle, the first risk information indicating at least one of a behavioral risk, a risk confidence, and a risk evolution trend associated with a target object of the first image and a risk area in the first image;
a second determination module (1320), configured to, upon determining the existence of a risk based on the first risk information, obtain a second image from a second viewing angle based on the near-field device, wherein the first viewing angle is different from the second viewing angle;
a third determination module (1330), configured to determine second risk information based on the second image from the second viewing angle; and
a fourth determination module (1340), configured to determine a target risk based on the first risk information and the second risk information.

12. The risk determination apparatus (1300) according to claim 11, wherein the apparatus further comprises:
a fifth determination module (1350), configured to, in response to the risk determined through the risk evolution trend being greater than a first risk threshold, or the risk confidence being less than a confidence threshold, or a failure to determine the existence of the risk based on the first image from the first viewing angle, determine the existence of the risk.

13. The risk determination apparatus (1300) according to claim 11, wherein the apparatus further comprises:
a sixth determination module (1370), configured to determine a preset risk area in the risk space to be detected and risk semantic information corresponding to the preset risk area based on an initial image; and
a seventh determination module (1380), configured to determine a risk semantic map based on the preset risk area and the risk semantic information, the risk semantic map indicating the determination of the behavioral risk.

14. A computer-readable storage medium, the storage medium storing a computer program, the computer program being used to execute the risk determination method according to any one of claims 1 to 10.

15. An electronic device (1500), comprising:
a processor (1510); and
a memory (1520) for storing instructions executable by the processor (1510);
the processor (1510) being configured to read executable instructions from the memory (1520) and execute the instructions to implement the risk determination method according to any one of claims 1 to 10.
